# EUROPÄISCHE PATENTSCHRIFT

(11) **EP 1 635 972 B1**
(45) Veröffentlichungstag und Bekanntmachung des Hinweises auf die Patenterteilung: **03.12.2008**
(21) Anmeldenummer: 04739431.7
(22) Anmeldetag: 28.05.2004
(51) Int. Cl.: B21J 13/08, B21J 13/10, B25J 9/16, B23Q 17/22, B23Q 17/24

(54) **VERFAHREN UND VORRICHTUNG ZUM UMFORMEN VON WERKSTÜCKEN**
METHOD AND DEVICE FOR SHAPING WORKPIECES
PROCEDE ET DISPOSITIF POUR TRAVAILLER DES PIECES PAR FORMAGE

(30) Priorität: 19.09.2003 DE 10343891
(43) Veröffentlichungstag der Anmeldung: 22.03.2006
(73) Patentinhaber: LANGENSTEIN & SCHEMANN GMBH, D-96450 Coburg (DE)
(72) Erfinder: BAUERSACHS, Lothar, 96279 Weidhausen (DE); BARNICKEL, Harald, 96489 Niederfüllbach (DE)
(74) Vertreter: Schröer, Gernot H.
(86) Internationale Anmeldenummer: PCT/EP2004/005781
(87) Internationale Veröffentlichungsnummer: WO 2005/037460

(56) Entgegenhaltungen:
- EP-A- 0 671 246
- DE-A- 10 133 624
- US-A- 3 824 833

## Beschreibung

Die Erfindung betrifft ein Verfahren zum Umformen, insbesondere Schmieden, von Werkstücken gemäß dem Oberbegriff des Patentanspruchs 1 und eine Vorrichtung zum Umformen von Werkstücken gemäß dem Oberbegriff des Patentanspruchs 15. Ein solches Verfahren und eine solche Vorrichtung sind aus US-A-3 824 833 bekannt.

Zur Herstellung von Bauteilen durch Kalt- oder Warmumformen, beispielsweise durch Schmieden, werden Umformmaschinen eingesetzt, in denen Umformwerkzeuge platziert sind, insbesondere schlagende Umformmaschinen wie Hammer, Kurbelpressen und Spindelpressen, insbesondere Schwungrad-Spindelpressen. Durch das Zusammenpressen oder Zusammenschlagen der Werkzeuge wird an einem in das Werkzeug eingelegten Werkstück-Rohteil der Umformvorgang vollzogen und das Werkstück damit in seine gewünschte Endform gebracht.

Um den Herstellprozess zu automatisieren, werden für die Handhabung der Werkstücke Handhabungsgeräte, insbesondere Manipulatoren und Industrieroboter, eingesetzt. Diese nehmen das Werkstück-Rohteil zumeist zunächst aus einem Magazin und positionieren es zwischen dem meist zweiteilig ausgebildeten Werkzeug, das in der Umformmaschine platziert ist. Nach Zurückziehen des Handhabungsgerätes aus dem Arbeitsbereich der Umformmaschine erfolgt der Umformprozess durch Zusammenfahren der Werkzeughälften. Nach dem Öffnen des Werkzeugs greift das Handhabungsgerät das fertige Werkstück und legt es in einem Fertigteilmagazin ab.

Die US-A-3 824 833 offenbart eine Schmiedepresse mit zwei Manipulatoren mit Greifern an einem Handhabungsarm, die jeweils zu einem Werkzeug der Schmiedepresse bewegt werden können zum Handhaben von Werkstücken

Die Prozesssicherheit des Umformprozesses hängt wesentlich davon ab, mit welcher Präzision das zu bearbeitende Werkstück-Rohteil in die Umformmaschine und namentlich in den Werkzeugbereich eingebracht und dort abgelegt wird. Um diesbezüglich hohen Anforderungen zu genügen, ist es im Rahmen des Rüstens der Umformmaschine erforderlich, das Handhabungsgerät genau auf die Position des Arbeitsbereichs des Werkzeugs einzustellen. Dies ist relativ umständlich und zeitaufwendig, so dass der Rüstvorgang entsprechend teuer ist.

Nach dem Einbau des Werkzeugs in die Umformmaschine nach einem Werkzeugwechsel muss bislang das Handhabungsgerät auf die genaue Lage des Werkzeugs eingerichtet werden. Dies verlängert die Rüstzeit und mindert die Produktivität.

Weiterhin kann es vorkommen, dass sich das Werkzeug während des Umformprozesses im Laufe der Zeit löst, was insbesondere bei schlagenden Gesenkumformmaschinen der Fall ist. Dadurch verändert sich die Lage und Orientierung des Werkzeugs, so dass es zum Aufrechterhalten hinreichender Prozesssicherheit notwendig ist, in gewissen Abständen eine Neuausrichtung des Handhabungsgerätes relativ zur aktuellen Position des Werkzeugs vorzunehmen. Bislang werden im Rahmen dieser Anpassung die vom Handhabungsgerät angefahrenen Punkte überprüft und bei Abweichungen entsprechende Korrekturen veranlasst. Auch hierdurch verlängert sich die Rüstzeit, und es kommt zu einer entsprechenden Einbuße in der Produktivität der Anlage.

Wird nach dem Stand der Technik auf eine zyklische Überprüfung der Position des Werkzeugs und eine Anpassung des Handhabungsgerätes verzichtet, kann die Rüstzeit zwar gering gehalten werden bzw. eine hohe Produktivität erreicht werden, allerdings erfolgt dies zu Lasten der Prozesssicherheit bzw. des Werkzeugverschleißes, da nicht sichergestellt werden kann, dass die Positionierung des Werkstück-Rohteils durch das Handhabungsgerät mit hinreichender Genauigkeit erfolgt. Es ist im allgemeinen zu befürchten, dass das Einlegen des Werkstück-Rohteils in das Werkzeug zu ungenau erfolgt und die genannten Probleme auftreten.

Ein weiteres in der Praxis auftretendes Problem ist das sog. "Nachsetzen" des Umformwerkzeugs. Darunter ist zu verstehen, dass nach einer gewissen Anzahl von Hüben der Umformmaschine die Gravuren des Werkzeugs verschlissen sind und das Werkzeug daher nachgearbeitet werden muss. Hierbei wird es in seiner Höhe z. B. abgefräst, d. h. eine neue Gravur wird auf diese Art und Weise in das Werkzeug eingebracht. Wird nun dieses, in seiner Höhe veränderte Werkzeug in die Umformmaschine eingebaut, ist eine komplette Neuausrichtung bzw. Einstellung des Handhabungsgerätes erforderlich, wenn die oben genannten Probleme vermieden werden sollen. Auch dies geht auf Kosten der Produktivität bzw. Prozesssicherheit der Anlage.

Der Erfindung liegt daher die Aufgabe zugrunde, ein Verfahren und Vorrichtung zum Umformen von Werkstücken vorzuschlagen, mit dem bzw. mit der es möglich ist, die genannten Nachteile wenigstens teilweise zu überwinden. Es soll also insbesondere erreicht werden, dass ein schnelles Rüsten der Maschine insbesondere nach einem Werkzeugwechsel bzw. nach einer Werkzeugüberarbeitung möglich wird, wobei trotzdem ein hohes Maß an Prozesssicherheit gewährleistet werden soll.

Die Lösung dieser Aufgabe durch die Erfindung wird erreicht mit den Merkmalen des Anspruches 1 bzw. des Anspruches 15.

Das Verfahren gemäß Anspruch 1 ist zum Umformen, insbesondere Schmieden, von Werkstücken mittels einer Umformmaschine mit wenigstens einem Umformwerkzeug bestimmt und umfasst die Verfahrensschritte:
a) Handhaben eines Werkstücks während eines Bearbeitungsprozesses, insbesondere vor, während und/oder nach dem Umformen des Werkstücks durch die Umformwerkzeuge, mittels wenigstens eines Handhabungsgerätes, insbesondere eines Manipulators oder Industrieroboters,
b) Ermitteln der Lage und/oder die Orientierung des Werkzeugs, insbesondere vor der Bearbeitung von Werkstücken auf der Umformmaschine mit diesem Werkzeug durch
   b1) Anfahren mindestens einer vorgegebenen Referenzfläche am Werkzeug mit einer Erfassungseinrichtung (oder: Bewegen der Erfassungseinrichtung zur Referenzfläche) und Erfassen wenigstens eine Position oder einen Punkt dieser Referenzfläche(n) mit der Erfassungseinrichtung,
   b2) Übertragen von der oder den erfasste(n) Position(en) der Referenzfläche(n) entsprechenden Informationen zu einem Auswertemittel und
   b3) Ermitteln der Lage und/oder die Orientierung des Werkzeugs aus den dieser bzw. diesen Position(en) entsprechenden Informationen der Referenzfläche(n) durch das Auswertemittel,
c) Zugrundelegen der vom Auswertemittel ermittelten Lage und/oder Orientierung des Werkzeugs bei der Handhabung der Werkstücke durch das wenigstens eine Handhabungsgerät.

Die Vorrichtung gemäß Anspruch 15 ist zum Umformen, insbesondere Schmieden, von Werkstücken und insbesondere zur Durchführung des Verfahrens gemäß der Erfindung geeignet und bestimmt und umfasst
a) wenigstens eine Umformmaschine, insbesondere Schmiedemaschine,
b) und wenigstens ein Handhabungsgerät zur Handhabung von (umzuformenden oder umgeformten) Werkstücken,
c) eine Erfassungseinrichtung,
d) an einem Werkzeug der Umformmaschine mindestens eine Referenzfläche zur Abtastung oder Erkennung mit der mindestens einen Erfassungseinrichtung und
e) ein Auswertemittel, das aus den von der Erfassungseinrichtung übertragenen Daten oder Signalen die Lage und/oder die Orientierung des Werkzeugs ermitteln kann oder ermittelt.

Vor der Bearbeitung von Werkstücken auf der Umformmaschine mit einem Werkzeug wird demnach, insbesondere nach einer Montage oder einem Wechsel eines Werkzeugs, die Lage und/oder Orientierung des Werkzeugs ermittelt, indem ein mit mindestens einem Sensor ausgestatteter Manipulator oder allgemein ein Handhabungsgerät mindestens eine Referenzfläche am Werkzeug anfährt, die ermittelten Positionen der Referenzflächen (in einem vorgegebenen Koordinaten- oder Bezugssystem des Handhabungsgeräts) zu einem Auswertemittel (oder: Rechenmittel) übertragen werden und im Auswertemittel die Lage und/oder Orientierung des Werkzeugs ermittelt werden. Mit der vorgeschlagenen Vorgehensweise wird erreicht, dass bei der Produktion von Werkstücken auf der Umformmaschine und insbesondere auf der Umformmaschine für Kalt- oder Warmumformung die Werkstückhandhabung unter Berücksichtigung der exakten Werkzeugposition erfolgt. Die Positionierung der zu bearbeitenden Werkstücke in die Maschine sowie deren Abtransport nach der Umformung durch das Handhabungsgerät erfolgt somit in genauerer und damit prozesssicherer Weise. Weiterhin kann die Rüstzeit der Maschine wesentlich verkürzt und das Rüsten als solches vereinfacht werden, so dass sich ein kostengünstigerer Herstellprozess ergibt.

Vorteilhafte Ausgestaltungen und Weiterbildungen des Verfahrens und der Vorrichtung gemäß der Erfindung ergeben sich aus den vom Anspruch 1 bzw. 15 jeweils abhängigen Ansprüchen.

Im Allgemeinen umfasst die Erfassungseinrichtung wenigstens einen Sensor und wenigstens ein den Sensor tragendes und bewegendes Handhabungsgerät.

In einer besonders vorteilhaften Ausführungsform wird das zur Ermittlung der Lage und/oder der Orientierung des Werkzeugs eingesetzte Handhabungsgerät der Erfassungseinrichtung anschließend oder zuvor auch zur Handhabung der Werkstücke eingesetzt. Das oder die Handhabungsgerät(e) zur Handhabung der Werkstücke führt also zugleich auch die Kalibrierschritte zur Ermittlung der Werkzeugposition durch.

Vorzugsweise ist die Erfassungseinrichtung oder deren Handhabungsgerät mit Wegmesssystem(en) ausgestattet, mit denen die Position des mindestens einen Sensors im Raum oder im Bezugssystem des Handhabungsgeräts für dei Werkstücke ermittelt wird.

Der oder die Sensoren der Erfassungseinrichtung können berührungslose Sensoren, beispielsweise Näherungsschalter oder -sensoren oder Ultraschallsensoren, sein oder auch berührende Sensoren wie Kurzschlussschalter oder Kontaktschalter. Die Sensoren sind insbesondere in der Nähe eines im Allgemeinen zum Greifen eines Werkstücks vorgesehenen Greifers des Handhabungsgerätes angeordnet.

Im Allgemeinen wird aus den erfassten Position(en) der Referenzfläche(n) des Werkzeugs bzw. den dazu zur Verfügung stehenden Informationen vom Auswertemittel die Lage des Koordinatensystems oder Bezugssystems jedes Handhabungsgeräts für die Handhabung der Werkstücke, insbesondere durch eine Translationsabbildung (lineare Verschiebung) und/oder Drehabbildung, berechnet.

Vorzugsweise werden mit der oder den Position(en) der Referenzflächen wenigstens drei Punkte im Raum oder für das Koordinatensystem oder Bezugssystem des wenigstens einen Handhabungsgerätes für die Handhabung der Werkstücke erfasst.

Es können an einer oder jeder Referenzfläche jeweils nur ein Punkt oder eine Position erfasst oder auch, durch Abtasten, auch mehrere Punkte erfasst werden. Insbesondere fährt das Handhabungsgerät mit der Erfassungseinrichtung wenigstens drei Referenzflächen am Werkzeug, vorzugsweise in einer vorgegebenen Reihenfolge, an und die Erfassungseinrichtung erfasst jeweils genau eine Position oder einen Punkt jeder dieser Referenzflächen.

Mit der oder den Position(en) der Referenzflächen wird in einer besonderen Ausführungsform nur eine Referenzebene im Raum oder für das Koordinatensystem oder Bezugssystem des wenigstens einen Handhabungsgerätes für die Handhabung der Werkstücke ermittelt. Die Referenzebene im Raum oder für das Koordinatensystem oder Bezugssystem des wenigstens einen Handhabungsgerätes für die Handhabung der Werkstücke kann insbesondere aus zwei Positionen der Referenzfläche(n) oder zwei Referenzflächen einerseits und einer vorbestimmten zusätzlichen linear unabhängigen Information, insbesondere der Information über eine zur Referenzebene parallele Ebene, ermittelt werden.

Im Allgemeinen fährt die Erfassungseinrichtung oder deren Handhabungsgerät von vorgegebenen Startpunkten aus die Referenzflächen am Werkzeug an. Die Startpunkte sind in der Regel oberhalb und/oder in der Nähe der Referenzflächen gewählt, so dass eine ungefähre Justierung bereits vorgenommen ist und durch die Erfassungseinrichtung nur noch eine Feinjustierung vorgenommen wird. Die Startpunkte stehen vorzugsweise in derselben Anordnung zueinander wie die Referenzflächen am Werkzeug zueinander.

Bevorzugt wird nach Durchführung eines Werkzeugwechsels oder nach einer Erstmontage oder wenn sich das Werkzeug gelockert hat, zunächst die Lage und/oder die Orientierung des Werkzeugs mittels des mit der mindestens einen Erfassungseinrichtung ausgestattete Handhabungsgerät und des Auswertemittels im Rahmen eines Lern- oder Kalibrierschrittes ermittelt wird bzw. werden und anschließend bei der Handhabung der Werkstücke die ermittelte Lage und/oder Orientierung des Werkzeugs zugrunde gelegt. Hierdurch wird der Werkzeugwechsel und das anschließende Neueinrichten der Maschine wesentlich schneller möglich.

In einer besonderen Weiterbildung kann eine automatische Überprüfung vorgesehen sein, bei der vor einer Ermittlung der Lage und/oder der Orientierung des Werkzeugs eine Prüfung der mindestens einen Erfassungseinrichtung erfolgt, indem diese an eine, vorzugsweise an einer Werkzeughalterung vorgesehenen, Prüffläche gefahren wird und insbesondere ein Alarmsignal ausgegeben wird, falls bei der Prüfung der Erfassungseinrichtung im Auswertemittel eine Unregelmäßigkeit festgestellt wird.

Die Referenzflächen am Werkzeug können als ebene Flächen ausgebildet sein, von denen wenigstens zwei im Wesentlichen rechtwinkelig zueinander ausgerichtet sind, um beispielsweise Höhe und Breite eines Werkzeugs zu bestimmen..

Die Genauigkeit der Erfassung der Referenzflächenposition(en) beträgt typischerweise 0,1 mm. Die Auswertemittel sind üblicherweise digitale Rechner mit Prozessor(en) und Speicher(n) und hinterlegten Steuer- und Berechnungsprogrammen.

Bei schlagenden Umformmaschinen wie Schmiedehämmern oder Spindelpressen wird mit dem Verfahren gemäß der Erfindung zumindest die Lage des unteren Werkzeugs oder Gesenks überprüft.

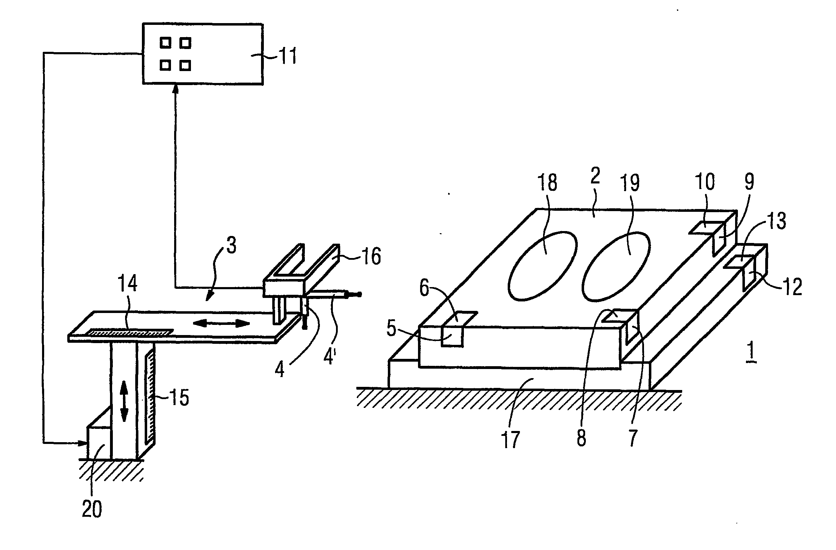

In der Zeichnung ist ein Ausführungsbeispiel der Erfindung dargestellt. Die einzige Figur zeigt schematisch eine Umformmaschine mit einem Werkzeug und einem Handhabungsgerät.

Nur sehr schematisch zeigt die Figur eine Umformmaschine 1, die eine Halterung 17 aufweist, die ein Werkzeug 2 spannt. Ebenfalls nur sehr schematisch ist angedeutet, dass das Werkzeug 2 Gravuren 18, 19 aufweist, die beim Umformprozess ein nicht dargestelltes Werkstück so verformen, dass es eine gewünschte Form einnimmt.

Zum Einlegen der Werkstück-Rohteile in das Werkzeug 2 der Umformmaschine 1 sowie zu deren Abtransport nach erfolgtem Umformvorgang dient ein Handhabungsgerät 3, der mit einem Greifer 16 versehen ist. Mit dem Greifer 16 wird das Werkstück gehandhabt. Das Handhabungsgerät 3 weist Wegmesssysteme 14 und 15 auf, die in der Figur ebenfalls nur sehr schematisch dargestellt sind. Das Handhabungsgerät 3 steht mit einem Auswertemittel 11 in Verbindung, das einen Antrieb 20 für die Achsen des Handhabungsgerätes 3 ansteuert. Damit kann der Greifer 16 mittels des Handhabungsgerätes 3 in die benötigten Positionen gefahren werden, um das Werkstück zu positionieren.

Besonders zweckmäßig und vorteilhaft ist es, die Gravuren des Werkzeugs 2 innerhalb einer Produktreihe an derselben Position einzubringen, um eine Korrektur der Positionen, die das Handhabungsgerät 3 anfährt, nicht vornehmen zu müssen.

Zur Erhöhung der Prozesssicherheit des Umformverfahrens und zur Reduzierung der Rüstzeit ist folgendes vorgesehen:

In der Nähe des Greifers 16 sind zwei Sensoren 4 und 4' am Handhabungsgerät 3 angeordnet. Im Ausführungsbeispiel handelt es sich bei den Sensoren 4, 4' um berührende Messsysteme, die mit einem Kurzschlussschalter ausgestattet sind. Mittels der Wegmesssysteme 14, 15 des Handhabungsgerätes 3 kann mit den Sensoren 4, 4' eine genaue Ortsbestimmung des Greifers 16 im Raum erfolgen. Die Ausbildung des Sensors 4, 4' mit einem Kurzschlussschalter hat den Vorteil, dass dieses Sensorsystem relativ unempfindlich gegenüber Verunreinigungen und Wärme ist.

Zur Beschleunigung des Rüstvorgangs und zur Erhöhung der Prozesssicherheit wird nach der Montage des Werkzeugs 2 in die Umformmaschine 1 das greiferseitige Ende des Handhabungsgerätes 3 und namentlich die Sensoren 4, 4' - veranlasst von dem Auswertemittel 11 - an eine vertikal ausgerichtete Prüffläche 12 und an eine horizontal ausgerichtete Prüffläche 13 gefahren, die an der Umformmaschine 1 angeordnet sind. Da sowohl der Ständer des Handhabungsgerätes 3 als auch die Umformmaschine 1 relativ zueinander ortsfest positioniert sind, ist es durch Anfahren der Prüfflächen 12, 13 möglich, zunächst die ordnungsgemäße Funktion des Handhabungsgerätes 3 bzw. der Sensoren 4, 4' festzustellen: Nach Vorgabe entsprechender Verschiebebewegungen der Achsen des Handhabungsgerätes 3 muss Kontakt zwischen dem Sensor 4, 4' und der Prüffläche 12, 13 vorliegen, wenn das System in einem ordnungsgemäßen Zustand ist. Dies kann vom Auswertemittel 11 registriert werden.

Sollte - im Falle einer Fehlersituation - der Kontakt zwischen Sensor 4, 4' und Prüffläche 12, 13 nicht ordnungsgemäß erfolgen, kann vom Auswertemittel 11 ein Alarmsignal ausgegeben werden, das auf einen nicht ordnungsgemäßen Zustand des Systems hinweist.

Ist gemäß dem Regelfall eine ordnungsgemäße Funktion des Systems festgestellt worden, veranlasst das Auswertemittel 11 anschließend eine Ansteuerung des Antriebs 20 des Handhabungsgerätes 3 in der Form, dass sechs verschiedene Referenzflächen 5, 6, 7, 8, 9, 10 am Werkzeug 2 von den Sensoren 4 bzw. 4' angefahren werden. Hierzu nähert sich der Endbereich des Handhabungsgerätes 3, an dem die Sensoren 4, 4' angebracht sind, in jeweils einer Achsrichtung vertikal oder horizontal den Referenzflächen 5, 6, 7, 8, 9, 10, bis Kontakt zwischen Sensor und Referenzfläche vorliegt. Der Sensor 4, 4' spricht bei Kontakt an, so dass das Auswertemittel 11 anhand der Wegmesssysteme 14, 15 die genaue Position der Referenzflächen, d. h. deren Raumposition, detektieren kann.

Wie bei tastenden Messmaschinen üblich, wird der Endbereich des Handhabungsgerätes 3 mit dem Greifer 16 und den Sensoren 4, 4' zunächst im Eilgang des Antriebs 20 in den Bereich der Referenzflächen 5, 6, 7, 8, 9, 10 gefahren. Anschließend wird mit verminderter Geschwindigkeit die jeweilige Referenzfläche angefahren, bis Kontakt zwischen Sensor 4, 4' und Referenzfläche 5, 6, 7, 8, 9, 10 vorliegt.

Nach Ermittlung der Lage der Referenzflächen 5, 6, 7, 8, 9, 10 kann das Auswertemittel 11 in an sich bekannter Weise anhand der ermittelten Raumpunkte am Werkzeug 2 in Kenntnis des Orts, an dem die Referenzflächen am Werkzeug 2 angebracht sind, auf dessen Lage und Orientierung schließen, d. h. aus der ermittelten Position der Referenzflächen 5, 6, 7, 8, 9, 10 im Raum kann das Auswertemittel 11 eine Referenzebene des Werkzeugs für das Handhabungsgerät oder die exakte dreidimensionale Lage oder Position des Werkzeugs 2 errechnen. Ausgehend hiervon wird bei der Handhabung der zu fertigenden Werkstücke durch das Handhabungsgerät 3 die genaue Lage und Position des Werkzeugs 2 für die Bewegungen des Handhabungsgerätes 3 in dessen Koordinatensystem oder Bezugssystem berücksichtigt, wenn Werkstücke mittels des Handhabungsgerätes 3 ins Werkzeug 2 eingelegt und nach erfolgter Umformung aus diesem wieder entnommen werden.

Damit ist nicht nur ein schnelles Rüsten der Umformmaschine nach erfolgtem Werkzeugwechsel möglich, es kann auch ein hoher Grad an Prozesssicherheit garantiert werden, da das Handhabungsgerät 3 das Werkstück in optimaler Lage ins Werkzeug 2 einbringen kann.

Im Ausführungsbeispiel ist gezeigt, wie das Handhabungsgerät 3, der für die Handhabung der Werkstücke vorgesehen ist, gleichzeitig die Messung der Referenzflächen 5, 6, 7, 8, 9, 10 vornimmt. Es kann auch alternativ hierzu vorgesehen sein, dass für die Ermittlung der Lage und Position des Werkzeugs 2 anhand der Referenzflächen ein separates Handhabungsgerät zum Einsatz kommt.

### Bezugszeichenliste

- 1: Umformmaschine
- 2: Werkzeug
- 3: Handhabungsgerät
- 4: Sensor
- 4': Sensor
- 5: Referenz fläche
- 6: Referenz fläche
- 7: Referenzfläche
- 8: Referenzfläche
- 9: Referenz fläche
- 10: Referenzfläche
- 11: Auswertemittel
- 12: Prüffläche
- 13: Prüffläche
- 14: Wegmesssystem
- 15: Wegmesssystem
- 16: Greifer
- 17: Halterung
- 18: Gravur
- 19: Gravur
- 20: Antrieb

## Patentansprüche

1. Verfahren zum Umformen, insbesondere Schmieden, von Werkstücken mittels einer Umformmaschine (1) mit wenigstens einem Umformwerkzeug, bei dem
a) während des Bearbeitungsprozesses eine Handhabung eines Werkstücks mittels wenigstens eines Handhabungsgerätes (3) erfolgt,
**dadurch gekennzeichnet, dass**
b) die Lage und/oder die Orientierung des Werkzeugs (2), insbesondere vor der Bearbeitung von Werkstücken auf der Umformmaschine (1) mit diesem Werkzeug, ermittelt wird bzw. werden, indem
b1) eine Erfassungseinrichtung (3, 4, 4') mindestens eine vorgegebene Referenzfläche (5, 6, 7, 8, 9, 10) am Werkzeug (2) anfährt und wenigstens eine Position oder einen Punkt dieser Referenzfläche(n) erfasst,
b2) die der oder den erfasste(n) Position(en) der Referenzfläche(n) (5, 6, 7, 8, 9, 10) entsprechenden Informationen, insbesondere Signale oder Daten der Erfassungseinrichtung, zu einem Auswertemittel (11) übertragen werden und
b3) vom Auswertemittel (11) aus diesen Informationen über die Position(en) der Referenzfläche(n) die Lage und/oder die Orientierung des Werkzeugs (2) ermittelt wird bzw. werden und
c) bei der Handhabung der Werkstücke durch das wenigstens eine Handhabungsgerät die vom Auswertemittel ermittelte Lage und/oder Orientierung des Werkzeugs (2) zugrunde gelegt wird bzw. werden.

2. Verfahren nach Anspruch 1, bei dem die Erfassungseinrichtung ein mit wenigstens einem Sensor (4, 4') ausgestattetes Handhabungsgerät (3) umfasst.

3. Verfahren nach Anspruch 2, bei der das Handhabungsgerät (3) der Erfassungseinrichtung auch als Handhabungsgerät zur Handhabung der Werkstücke eingesetzt wird.

4. Verfahren nach einem der vorhergehenden Ansprüche, bei dem aus den erfassten Position(en) der Referenzfläche(n) des Werkzeugs vom Auswertemittel die Lage des Koordinatensystems oder Bezugssystems jedes Handhabungsgeräts für die Handhabung der Werkstücke, insbesondere durch eine Translations- und/oder Rotationsabbildung, berechnet wird.

5. Verfahren nach einem der vorhergehenden Ansprüche, bei dem mit der oder den Position(en) der Referenzflächen wenigstens drei Punkte im Raum oder für das Koordinatensystem oder Bezugssystem des wenigstens einen Handhabungsgerätes für die Handhabung der Werkstücke erfasst werden.

6. Verfahren nach einem der vorhergehenden Ansprüche, bei dem die Erfassungseinrichtung durch Abtasten der Referenzfläche(n) wenigstens zwei Positionen oder Punkte dieser Referenzfläche(n) erfasst.

7. Verfahren nach einem der vorhergehenden Ansprüche, bei dem die Erfassungseinrichtung wenigstens drei Referenzflächen am Werkzeug, vorzugsweise in einer vorgegebenen Reihenfolge, anfährt und jeweils genau eine Position oder einen Punkt jeder dieser Referenzflächen erfasst.

8. Verfahren nach einem der vorhergehenden Ansprüche, bei dem mit der oder den Position(en) der Referenzflächen eine Referenzebene im Raum oder für das Koordinatensystem oder Bezugssystem des wenigstens einen Handhabungsgerätes für die Handhabung der Werkstücke ermittelt wird.

9. Verfahren nach einem der vorhergehenden Ansprüche, bei dem eine Referenzebene im Raum oder für das Koordinatensystem oder Bezugssystem des wenigstens einen Handhabungsgerätes für die Handhabung der Werkstücke aus zwei Positionen der Referenzfläche(n) oder zwei Referenzflächen einerseits und einer vorbestimmten zusätzlichen linear unabhängigen Information, insbesondere der Information über eine zur Referenzebene parallele Ebene, ermittelt wird.

10. Verfahren nach einem der vorhergehenden Ansprüche, bei dem die Erfassungseinrichtung oder das Handhabungsgerät der Erfassungseinrichtung von vorgegebenen Startpunkten aus die Referenzflächen am Werkzeug anfährt.

11. Verfahren nach Anspruch 10, bei dem die Startpunkte in derselben Anordnung zueinander stehen wie die Referenzflächen am Werkzeug zueinander.

12. Verfahren nach einem der vorhergehenden Ansprüche, bei dem nach Durchführung eines Werkzeugwechsels zunächst die Lage und/oder die Orientierung des Werkzeugs (2) mittels der Erfassungseinrichtung (3,4, 4') und des Auswertemittels (11) im Rahmen eines Lern- oder Kalibrierschrittes ermittelt wird bzw. werden und anschließend bei der Handhabung der Werkstücke die ermittelte Lage und/oder Orientierung des Werkzeugs (2) zugrunde gelegt wird bzw. werden.

13. Verfahren nach einem der vorhergehenden Ansprüche, bei dem vor einer Ermittlung der Lage und/oder der Orientierung des Werkzeugs (2) eine Prüfung der mindestens einen Erfassungseinrichtung (4, 4') oder ihres/r Sensor(n) erfolgt, indem diese an eine, vorzugsweise an einer Werkzeughalterung vorgesehenen, Prüffläche (12, 13) gefahren wird.

14. Verfahren nach Anspruch 13, bei dem ein Alarmsignal ausgegeben wird, falls bei der Prüfung der mindestens einen Erfassungseinrichtung (4, 4') im Auswertemittel (11) eine Unregelmäßigkeit festgestellt wird.

15. Vorrichtung zum Umformen, insbesondere Schmieden, von Werkstücken, insbesondere zur Durchführung des Verfahrens nach einem der Ansprüche 1 bis 14, mit
a) wenigstens einer Umformmaschine (1), insbesondere Schmiedemaschine,
b) wenigstens einem Handhabungsgerät (3) zur Handhabung von Werkstücken, **gekennzeichnet durch**
c) mindestens eine Erfassungseinrichtung (4, 4')
wobei
d) an einem Werkzeug (2) der Umformmaschine (1) mindestens eine Referenzfläche (5, 6, 7, 8, 9, 10) zur Abtastung oder Erkennung mit der mindestens einen Erfassungseinrichtung (4, 4') angeordnet ist
und
e) ein Auswertemittel (11) vorgesehen ist, das aus den von der Erfassungseinrichtung (4, 4') übertragenen Daten oder Signalen die Lage und/oder die Orientierung des Werkzeugs (2) ermitteln kann oder ermittelt,
f) wobei die vom Auswertemittel ermittelte Lage und/oder Orientierung des Werkzeugs (2) bei der Handhabung der Werkstücke **durch** das wenigstens eine Handhabungsgerät zugrundegelegt wird bzw. werden.

16. Vorrichtung nach Anspruch 15, bei der die Erfassungseinrichtung ein mit wenigstens einem Sensor (4, 4') ausgestattetes Handhabungsgerät (3) umfasst, wobei mindestens ein Sensor berührungslos oder berührend arbeitet oder ein Näherungsschalter oder -sensor oder ein Ultraschallsensor oder ein Kurzschlussschalter oder Kontaktschalter ist.

17. Vorrichtung nach einem der Ansprüche 15 bis 16, bei der die Erfassungseinrichtung, insbesondere deren Handhabungsgerät (3), mit Wegmesssystem(en) (14, 15) ausgestattet ist, mit denen die Position des mindestens einen Sensors (4, 4') im Raum ermittelt werden kann.

18. Vorrichtung nach Anspruch 16, bei der das Handhabungsgerät (3) einen Greifer (16) zum Greifen eines Werkstücks aufweist und in der Nähe des Greifers der mindestens eine Sensor (4, 4') angeordnet ist.

19. Vorrichtung nach einem der Ansprüche 15 bis 18, bei der die Referenzflächen (5, 6, 7, 8, 9, 10) am Werkzeug (2) als ebene Flächen ausgebildet sind, von denen wenigstens zwei im Wesentlichen rechtwinkelig zueinander ausgerichtet sind und/oder mit mindestens einer Prüffläche (12, 13), mit der die Funktion des Handhabungsgerätes (3) und/oder des mindestens einen Sensors (4, 4') geprüft werden kann.

## Claims

1. Method for forming, in particular forging, workpieces by means of a forming machine (1) with at least one forming tool, wherein
a) a workpiece is handled during the processing by at least one handling device (3),
**characterised in that**
b) the position and/or the orientation of the tool (2) is or are determined, in particular prior to the processing of workpieces on the forming machine (1) with this tool, **in that**
b1) a detection device (3, 4, 4') approaches a predefined reference surface (5, 6, 7, 8, 9, 10) on the tool (2) and detects at least one position or a point on this or these reference surface(s),
b2) relevant information from the detected position(s) of the reference surface(s) (5, 6, 7, 8, 9, 10), in particular signals or data from the detection device, is communicated to an evaluating means (11) and
b3) the position and/or the orientation of the tool (2) is or are determined by the evaluating means (11) from the information about the position(s) of the reference surface(s) and
c) the position and/or the orientation of the tool (2) determined by the evaluating means is or are taken as a basis for the handling of the workpieces by the at least one handling device.

2. Method according to Claim 1, wherein the detection device comprises a handling device (3) fitted with at least one sensor (4, 4').

3. Method according to Claim 2, wherein the handling device (3) of the detection device is also used as a handling device for handling the workpieces.

4. Method according to one of the previous claims, wherein the position of the coordinate system or reference system of each handling device for handling the workpieces is calculated by the evaluating means from the detected position(s) of the reference surface(s) of the tool, in particular by translation and/or rotation imaging.

5. Method according to one of the previous claims, wherein, given the position(s) of the reference surface(s), at least three points are detected in the space or for the coordinate system or reference system of the at least one handling device for handling the workpieces.

6. Method according to one of the previous claims, wherein the detection device detects at least two positions or points on this or these reference surface(s) by scanning the reference surface(s).

7. Method according to one of the previous claims, wherein the detection device moves toward at least three reference surfaces on the tool, preferably in a predefined sequence, and in each case detects precisely a position or point on each of these reference surfaces.

8. Method according to one of the previous claims, wherein, with the position(s) of the reference surface(s), a reference plane is determined in the space or for the coordinate system or reference system of the at least one handling device for handling the workpieces.

9. Method according to one of the previous claims, wherein a reference plane is determined in the space or for the coordinate system or reference system of the at least one handling device for handling the workpieces from two positions of the reference surface(s) or two references surfaces on the one hand and from predetermined additional, linearly independent information, in particular the information from a plane parallel to the reference plane.

10. Method according to one of the previous claims, wherein the detection device or the handling device of the detection device moves toward the reference surfaces on the tool from predefined starting points.

11. Method according to Claim 10, wherein the starting points are in the same arrangement in relation to each other as the reference surfaces on the tool.

12. Method according to one of the previous claims, wherein, after a change of tool has been effected, first the position and/or the orientation of the tool (2) is or are determined by means of the detection device (3, 4, 4') and the evaluating means (11) as part of a learning or calibration step and then the position and/or the orientation of the tool (2) is or are taken as a basis in the handling of the workpieces.

13. Method according to one of the previous claims, wherein, prior to the position and/or the orientation of the tool (2) being determined, a test of the at least one detection device (4, 4') or its/their sensor(s) is carried out, in that this is conducted on a test surface (12, 13) preferably provided on a tool holder.

14. Method according to Claim 13, wherein an alarm signal is emitted if any irregularity is ascertained in the evaluating means (11) on testing the at least one detection device (4, 4').

15. Device for forming, in particular forging, workpieces, in particular for carrying out the method according to one of the Claims 1 to 14, with
a) at least one forming machine (1), in particular forging machine,
b) at least one handling device (3) for handling workpieces,
**characterised by**
c) at least one detection device (4, 4')
wherein
d) on one tool (2) of the forming machine (1) at least one reference surface (5, 6, 7, 8, 9, 10) is arranged for scanning or detection by the at least one detection device (4, 4')
and
e) an evaluating means (11) is provided, which can or does determine the position and/or the orientation of the tool (2) from the data or signals communicated by the detection device (4, 4'),
f) wherein the position and/or the orientation of the tool (2) determined by the evaluating means is or are taken as a basis in the handling of the workpieces by the at least one handling device.

16. Device according to Claim 15, wherein the detection device comprises a handling device (3) fitted with at least one sensor (4, 4'), wherein at least one sensor works with or without contact or is a proximity switch or sensor or an ultrasound sensor or a short circuit switch or contact switch.

17. Device according to one of the Claims 15 to 16, wherein the detection device, in particular its handling device (3) is fitted with position measuring system(s) (14, 15), with which the position of the at least one sensor (4, 4') in the space can be determined.

18. Device according to Claim 16, wherein the handling device (3) has a gripper (16) for gripping a workpiece and the at least one sensor (4, 4') is arranged near the gripper.

19. Device according to one of the Claims 15 to 18, wherein the reference surfaces (5, 6, 7, 8, 9, 10) on the tool (2) are configured as level surfaces, at least two of which are aligned essentially at right angles to each other, and/or with at least one test surface (12, 13) with which the function of handling device (3) and/or of the at least one sensor (4, 4') can be tested.

## Revendications

1. Procédé de formage, en particulier de forgeage, de pièces au moyen d'une machine de formage (1) avec au moins un outil de formage, dans lequel
a) pendant le processus d'usinage, une manipulation d'une pièce a lieu au moyen d'au moins un appareil de manipulation (3),
**caractérisé en ce que**
b) la position et/ou l'orientation de la pièce (2), en particulier avant l'usinage de pièces sur la machine de formage (1) avec cet outil est ou sont déterminées, **en ce que**
b1) une installation de détection (3, 4, 4') s'approche au moins d'une face de référence prédéfinie (5, 6, 7, 8, 9, 10) à l'outil (2) et détecte au moins une position ou un point de cette ou ces faces de référence,
b2) les informations correspondant à la ou les positions détectée(s) de la ou des faces de référence (5, 6, 7, 8, 9, 10), en particulier des signaux ou des données de l'installation de détection, sont transférées à un moyen d'évaluation (11) et
b3) par le moyen d'évaluation (11), à partir de ces informations se rapportant à la ou les positions de la ou des faces de référence, la position et/ou l'orientation de l'outil (2) est respectivement sont déterminées et
c) lors de la manipulation des pièces par au moins un appareil de manipulation, la position et/ou l'orientation de la pièce (2) déterminées par le moyen d'évaluation sert ou servent de base.

2. Procédé selon la revendication 1, dans lequel l'installation de détection comprend un appareil de manipulation (3) muni d'au moins un capteur (4, 4').

3. Procédé selon la revendication 2, dans lequel l'appareil de manipulation (3) de l'installation de détection est également utilisé comme appareil de manipulation pour manipuler les pièces.

4. Procédé selon l'une des revendications précédentes, dans lequel est calculée à partir de la ou des positions détectées de la ou des faces de référence de l'outil, par le moyen d'évaluation, la position du système de coordonnées ou du système de référence de chaque appareil de manipulation pour la manipulation des pièces, en particulier par une représentation de translation et/ou de rotation.

5. Procédé selon l'une des revendications précédentes, dans lequel avec la
ou les positions des faces de référence au moins trois points dans l'espace ou pour le système de coordonnées ou le système de référence d'au moins un appareil de manipulation sont détectés pour la manipulation des pièces.

6. Procédé selon l'une des revendications précédentes, dans lequel l'installation de détection, par balayage de la ou des faces de référence, détecte au moins deux positions ou points de cette ou ces faces de référence.

7. Procédé selon l'une des revendications précédentes, dans lequel l'installation de détection s'approche d'au moins trois faces de référence à l'outil, de préférence selon un ordre prédéfini, et détecte respectivement d'une manière précise une position ou un point de chacune de ces faces de référence.

8. Procédé selon l'une des revendications précédentes, dans lequel un plan de référence dans l'espace ou pour le système de coordonnées ou système de référence d'au moins un appareil de manipulation pour la manipulation des pièces est déterminé avec la ou les positions des faces de référence.

9. Procédé selon l'une des revendications précédentes, dans lequel est déterminé un plan de référence dans l'espace ou pour le système de coordonnées ou système de référence d'au moins un appareil de manipulation pour la manipulation des pièces à partir de deux positons de la ou des faces de référence ou deux faces de référence, d'une part, et une information linéaire indépendante additionnelle prédéfinie, en particulier l'information se rapportant à un plan parallèle au plan de référence.

10. Procédé selon l'une des revendications précédentes, dans lequel l'installation de détection ou l'appareil de manipulation de l'installation de détection, à partir de points de départ prédéfinis, s'approche des faces de référence à la pièce.

11. Procédé selon la revendication 10, dans lequel les points de départ sont dans la même disposition les uns par rapport aux autres que les faces de référence à l'outil.

12. Procédé selon l'une des revendications précédentes, où après l'exécution d'un échange d'outil, tout d'abord la positon et/ou l'orientation de l'outil (2) est respectivement sont déterminées au moyen de l'installation de détection (3, 4, 4') et du moyen d'évaluation (11) dans le cadre d'une étape d'apprentissage ou de calibrage et ensuite, pour la manipulation des pièces, la position et/ou orientation déterminée de l'outil (2) sert respectivement servent de base.

13. Procédé selon l'une des revendications précédentes, dans lequel, avant une détermination de la position et/ou orientation de l'outil (2), a lieu une vérification d'au moins une installation de détection précitée (4, 4')
ou de son/ses capteurs, en ce que celle-ci est amenée à une face de test (12, 13) prévue de préférence à un logement d'outil.

14. Procédé selon la revendication 13, dans lequel un signal d'alarme est émis dans le cas où lors de la vérification d'au moins une installation de détection précitée (4, 4'), une irrégularité est constatée dans le moyen d'évaluation (11).

15. Dispositif de formage, en particulier de forgeage, de pièces, en particulier pour l'exécution du procédé selon l'une des revendications 1 à 14, avec
a) au moins d'une machine de formage (1), en particulier machine de forgeage,
b) au moins un appareil de manipulation (3) pour la manipulation de pièces,
**caractérisé par**
c) au moins une installation de détection (4, 4')
où
d) est disposée à un outil (2) de la machine de formage (1) au moins une face de référence (5, 6, 7, 8, 9, 10) pour le balayage ou la détection avec au moins une installation de détection précitée (4, 4')
et
e) est prévu un moyen d'évaluation (11) qui peut déterminer ou détermine, à partir des données ou signaux transmis par l'installation de détection (4, 4'), la position et/ou l'orientation de la pièce (2),
f) où la position et/ou orientation de l'outil (2) déterminées par le moyen d'évaluation sert ou servent de base pour la manipulation des pièces par au moins un appareil de manipulation précité.

16. Dispositif selon la revendication 15, où l'installation de détection comprend un appareil de manipulation (3) équipé d'au moins un capteur (4, 4'), où au moins un capteur travaille sans contact ou avec contact ou est un commutateur ou capteur de proximité ou un capteur à ultrasons ou un commutateur de court-circuit ou un commutateur de contact.

17. Dispositif selon l'une des revendications 15 à 16, où l'installation de détection, en particulier son appareil de manipulation (3), est équipé d'un ou de systèmes de mesure de déplacement (14, 15) au moyen desquels peut être déterminée la position d'au moins un capteur (4, 4') dans l'espace.

18. Dispositif selon la revendication 16, où l'appareil de manipulation (3) présente une griffe (16) pour la saisie d'une pièce, et au voisinage de la griffe, au moins un capteur précité (4, 4') est disposé.

19. Dispositif selon l'une des revendications 15 à 18, où les faces de référence (5, 6, 7, 8, 9, 10) à l'outil (2) sont réalisées comme des faces planes dont au moins deux sont orientées sensiblement à angle droit l'une relativement à l'autre et/ou avec au moins une face de test (12, 13) avec laquelle peut être vérifiée la fonction de l'appareil de manipulation (3) et/ou d'au moins un capteur précité (4, 4').
